# EUROPEAN PATENT SPECIFICATION

(11) **EP 0 905 475 B1**
(45) Date of publication and mention of the grant of the patent: **25.06.2003**
(21) Application number: 98307954.2
(22) Date of filing: 30.09.1998
(51) Int. Cl.: G01B 7/34, G01N 27/00, G01B 7/16, G12B 21/02

(54) **Semiconductor strain sensor, method of manufacturing the sensor, and scanning probe microscope**
Halbleiter-Dehnungs-Sensor, Vefahren zu dessen Herstellung und Rastersondenmikroskop
Capteur semi-conducteur de tension, procédé pour sa fabrication et sonde-microscope de balayage

(30) Priority: 30.09.1997 JP 26676097; 19.02.1998 JP 3735098; 07.09.1998 JP 25297298
(43) Date of publication of application: 31.03.1999
(73) Proprietor: Seiko Instruments Inc., Chiba-shi, Chiba-ken 261-0023 (JP); IBM Corporation, Armonk, NY 10504 (US)
(72) Inventor: Takahashi, Hiroshi, Mihama-ku Chiba-shi Shiba (JP); Shimizu, Mobuhiro, Mihama-ku Chiba-shi Shiba (JP); Shirakawabe, Yoshiharu, Mihama-ku Chiba-shi Shiba (JP); Despont, Michel, Saumerstrasse 4 CH-8803 Ruschlikon (CH)
(74) Representative: Sturt, Clifford Mark

(56) References cited:
- EP-A- 0 491 973
- EP-A- 0 802 394
- WO-A-92/12398
- WO-A-94/29894
- WO-A-97/09584
- US-A- 4 422 063
- US-A- 5 489 774
- US-A- 5 632 841
- FRIEDRICH A P ET AL: "LATERAL BACKWARD DIODES AS STRAIN SENSORS" TECHNICAL DIGEST OF THE INTERNATIONAL ELECTRON DEVICES MEETING (IEDM), WASHINGTON, DEC. 10 - 13, 1995, 10 December 1995, pages 597-600, XP000624773 INSTITUTE OF ELECTRICAL AND ELECTRONIC ENGINEERS

## Description

The present invention relates to a semiconductor strain sensor, a method of manufacturing the sensor, and a scanning probe microscope, particularly a semiconductor strain sensor, a method of manufacturing the sensor, and a scanning microscope having improved detecting sensitivity by pre-stressing a probe in the semiconductor strain sensor so as to enable it to detect deflection of the probe as a change of a current-voltage characteristic at a semiconductor junction portion thereof.

In the conventional scanning probe microscope (SPM), an exploring needle is attached at the free end of a probe, and deflection of the probe generated by moving up and down of the exploring needle in response to the raggedness of a surface of a sample has been detected using optical interferometry of the optical polarisation technique. However, there has been a problem that the construction needs complex adjustment in the optical detecting method. On the other hand, recently a small-size, light-weight semiconductor strain sensor has been used, which can directly output deflection as an electric signal. The sensor is adopted for the probe of the SPM.

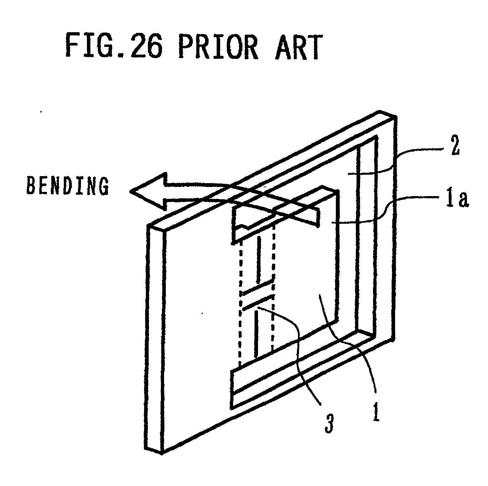

As shown in Fig. 26, for example, the probe-type semiconductor strain sensor comprises a cantilever arm portion (beam portion) 1 having a free end 1a formed by selectively etching a part of a semiconductor substrate 2 so as to have a U-shaped and a gage portion 3 formed near the fixed end (root) of the cantilever arm portion 1. The gage portion 3 detects stress/strain appearing at this portion as a result of deflection of the free end 1a so as to convert the strain to an electric signal and thus produce an output.

In the conventional semiconductor strain sensor, as described in Japanese Laid Open Patent No. 5-196458 for example, the gage portion is constructed with piezo resistance. As electric resistance of the piezo element varies by adding stress, deflection is detected by measuring resistance change of the piezo element using a resistance bridge circuit such as Wheatstone Bridge or the like.

However, when deflection of the probe is detected as stress strain applied to a piezo resistance, as the resistance rate of change for strain of the piezo resistance, namely voltage or current rate of change, is small and sensitivity is low, not only is a complex bridge circuit needed for detection, but also extremely accurate adjustment of each resistance of the resistance bridge is needed.

In order to solve these problems, the applicant has previously invented a semiconductor strain sensor pn junction, a kind of semiconductor junction, and detection of deflection of the probe as an electric characteristic (diode characteristic) of the pn junction (Japanese Applied Patent No. 9-44372).

In the semiconductor strain sensor which detects deflection of the probe as a change of a current-voltage characteristic of the semiconductor junction, detecting sensitivity is sharply improved comparing with the conventional semiconductor strain sensor which detects deflection as a resistance of a piezo element. However, the larger the domain in which deflection (stress strain) occurs, the more the rate of change of diode characteristic for deflection, and there has been a problem in that insufficient detection is obtained if the deflection is small.

An object of the present invention is to provide a semiconductor strain sensor solving the conventional above-mentioned problem and outputting deflection of the probe as a large signal change while having a simple construction, a method of manufacturing the sensor, and a scanning probe microscope adopting the semiconductor strain sensor.

To achieve the above-mentioned object, the present invention has the following configuration:
(1) A semiconductor strain sensor of the present invention comprises a probe having a free end and a fixed end, a semiconductor junction formed at a domain where stress strain appears by displacement of the free end, and means on a surface of said probe so that stress strain always appears at the domain when stress strain appears by displacement of said free end.
(2) A method of processing a semiconductor strain sensor of the present invention comprises the steps of forming a probe having a free end and a fixed end by etching a first conductive type semiconductor substrate, forming a mask to define a domain where stress strain appears as a result of displacement of said free end, forming a semiconductor junction at the domain where said stress strain appears by doping a second conductive type impurity in the domain, and forming a thin film on a surface of said probe so that stress strain always appears at the domain as a result of displacement of said free end.
(3) In the probe of the present invention, a semiconductor junction is formed at a domain where stress strain appears as a result of displacement of a free end, and a cantilever type semiconductor strain sensor having a thin film on a surface of said probe so that stress strain always appears the domain is used for a scanning probe. Either a pn junction or a bipolar transistor may be used for the semiconductor junction.

According to the configuration (1), as stress strain always appears at the domain as a result of displacement of the free end of the probe without relation to displacement of the free end of the probe and further large stress strain appears at the semiconductor junction part when the free end of the probe bends, the electric characteristic of the semiconductor junction can be sharply changed.

According to the configuration (2), a semiconductor junction is formed at the domain where stress appears as a result of displacement of the free end and a cantilever type semiconductor strain sensor in which stress strain always appears at the domain can be produced.

According to the configuration (3), as strain of the probe produces a large change of electric characteristic of the semiconductor junction, the surface shape of the sample can be observed with high sensitivity.

Embodiments of the present invention will now be described in more detail by way of further example only and with reference to the accompanying drawings, in which:-

Fig. 1 is a perspective view of an outline of one construction of the present invention.

Fig. 2A is a plan view of a first embodiment of the present invention and Fig. 2B is a sectional view taken along the line A-A' of Fig. 2A.

Fig. 3A is a view showing a strain current-voltage characteristic of a pn junction.

Fig. 4A is a current-strain characteristic and Fig. 4B is a voltage-strain characteristic of a pn junction compared with a piezo resistance.

Fig. 5A is a plan view of a second embodiment of the present invention and Fig. 5B is a sectional view taken along the line by C-C' of Fig. 5A.

Figs. 6A to 6I are sectional views showing a method of processing of the probe according to Fig. 2 in process steps.

Fig. 7A is a plan view of a third embodiment of the present invention and Fig. 7B is a sectional view taken along the line D-D' of Fig. 7A.

Fig. 8A is a plan view of a fourth embodiment of the present invention and Fig. 8B is a sectional view taken along the line E-E' of Fig. 8A.

Fig. 9 is a plan view of a fifth embodiment of the present invention.

Fig. 10 is a plan view of a sixth embodiment of the present invention.

Fig. 11 is a plan view of a seventh embodiment of the present invention.

Fig. 12 is a plan view of an eighth embodiment of the present invention.

Fig. 13 is a plan view of a ninth embodiment of the present invention.

Fig. 14 is a sectional view taken along the line F-F' of Fig. 9, showing a depletion layer appearing near a pn junction.

Fig. 15A is a plan view of a tenth embodiment of the present invention, and Figs. 15B and 15C are sectional views taken along the line G-G' of Fig. 15A.

Fig. 16A is a plan view of an eleventh embodiment of the present invention, and Figs. 16B and 16C are sectional views taken along the line H-H' of Fig. 16A.

Fig. 17A is a plan view of a twelfth embodiment of the present invention, and Figs. 17B and 17C are sectional views taken along the line I-I' of Fig. 17A.

Fig. 18 is a plan view of the sensor of the twelfth embodiment of the present invention actually produced on a probe.

Fig. 19A is a perspective view of a bipolar transistor for a semiconductor junction of the present invention. Fig. 19B is a sectional view taken along the line J-J' of Fig. 19A.

Fig. 20A is a plan view of an NPN-type bipolar transistor of a thirteenth embodiment according to the present invention. Fig. 20B is a sectional view taken along the line K-K' of Fig. 20A.

FIG. 21 is a characteristic of collector current change to strain of a bipolar transistor of the present embodiment.

Fig. 22 is a detecting circuit of a bipolar transistor of the present embodiment.

Fig. 23A is a plan view of a PNP transistor of a fourteenth embodiment according to the present invention, and Fig. 23B is a sectional view taken along the line L-L' of Fig. 23A.

Fig. 24A is a plan view of a horizontal type PNP transistor of a fifteenth embodiment according to the present invention, and Fig. 24B is a sectional view taken along the line M-M' of Fig. 24A.

Fig. 25 is a block diagram of the main portion of a scanning probe microscope using the present invention.

Fig. 26 is a perspective view of a prior semiconductor strain sensor.

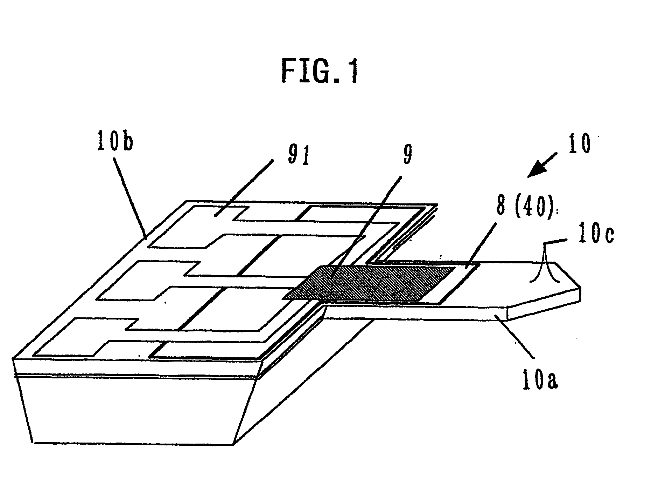

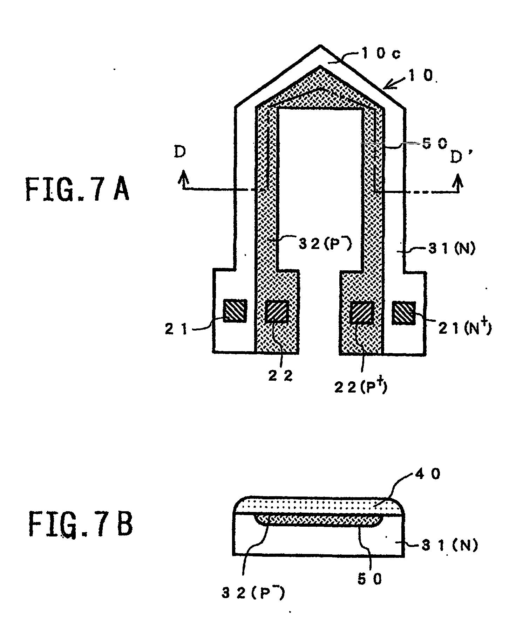

Referring to the figures, the present invention will now be described in detail. Fig. 1 is a perspective view showing an example of construction of a general probe in accordance with the present invention. A probe 10 comprises an arm portion 10a having a free end, an exploring needle 10c being a tip of the arm portion, a supporting portion 10b holding and fixing the arm portion, a semiconductor junction 9, and thin film 8 formed at the domain including at least the semiconductor junction 9. As bending of the arm portion 10a is concentrated on a portion at the root thereof, it is desirable to form the semiconductor junction 9 at the domain including the junction of at least the arm portion 10a and the supporting portion 10b. The thin film 8 functions to pre-stress to the semiconductor junction 9. In the case which stress is compressive stress, it is desirable that the direction of the exploring needle 10c is almost vertical toward the sample so as to observe accurately during sample observation because the arm portion 10a bends to the under side as positioned in Fig. 1. Although the sample can be observed without the exploring needle 10c, it is desirable that the exploring needle is longer than the raggedness of the observed sample and that the diameter of the tip is small because the resolving power depends greatly on the diameter of the tip of the exploring needle 10c. There are various kinds of shape which can be used such as the substantially rectangle shape shown in Fig. 1, the U-shape of Fig. 7, or the like so that the design can correspond to the characteristic use to which it is to be put.

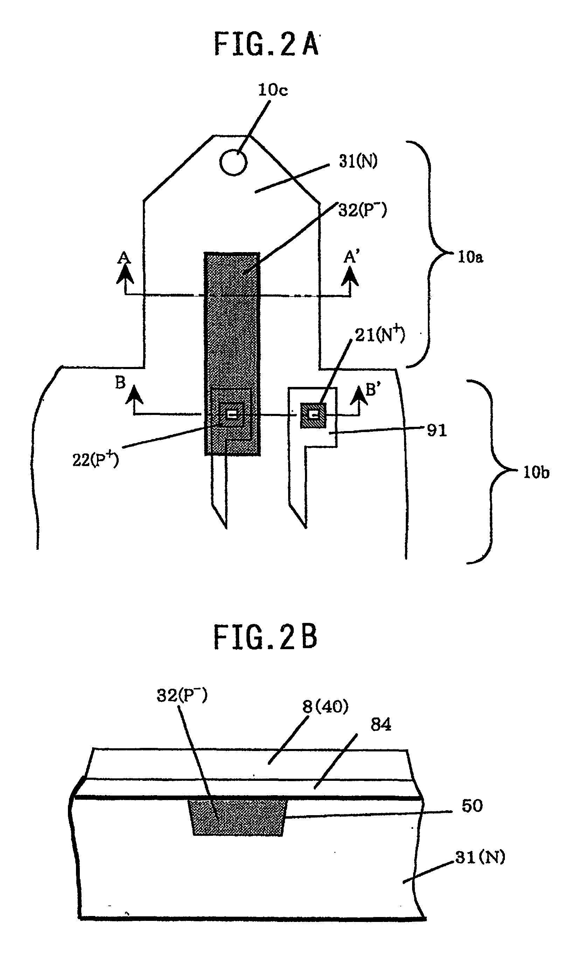

Fig. 2A is a plan view of a probe-type semiconductor strain sensor of a first embodiment of the present invention. Fig. 2B is a cross-sectional view taken along the line A-A' of Fig. 2A. A pn junction is used for the semiconductor junction 9.

In the present embodiment, the probe 10 is formed by an N-type substrate 31, and at an inside surface thereof, a P⁻ diffusion domain 32 is formed.

As a pn junction 50 is formed at the border of P⁻ diffusion domain 32 and N-type substrate 31, the pn junction 50 is formed at the inside of the cantilever arm portion 10a in the present embodiment. In the supporting portion 10b, N⁺ contact domain 21 is formed in the N-type substrate, and P⁺ contact domain 22 is formed in the P⁻ diffusion domain 32.

An insulation film 40 such as, for example, SiO₂ film, Si₃N₄ film, or the like is layered on the surface of the N-type substrate 31 as a thin film 8 for always applying stress especially to the cantilever arm portion 10a. It is desirable to form the insulation film 40 so that pre-stress strain is about 1x10⁹ Pa or 1x10¹⁰ dyn/cm². It is not needed that the insulation film 40 is formed over all of the surface of the N-type substrate 31, and the film may be formed, for example, only on the surface of the cantilever arm portion 10a provided that stress strain can appear at the pn junction.

In this construction, as the cantilever arm portion 10a of the probe 10 bends at the supporting portion 10b which functions as a fulcrum depending on the shape of the surface of a sample when the exploring needle scans the surface of the sample, strain stress appears at the pn junction 50 formed at the arm portion 10a.

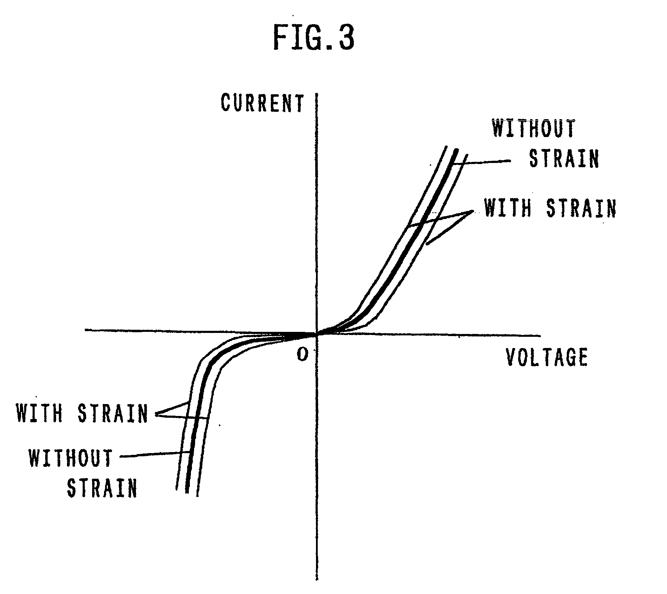

Fig. 3 is an example showing characteristics of the diode characteristic of a pn junction depending on stress strain. It is noticed that the current-voltage characteristic changes when stress strain appears at the pn junction. The characteristic change is not general because it depends on the structure or shape of the pn junction.

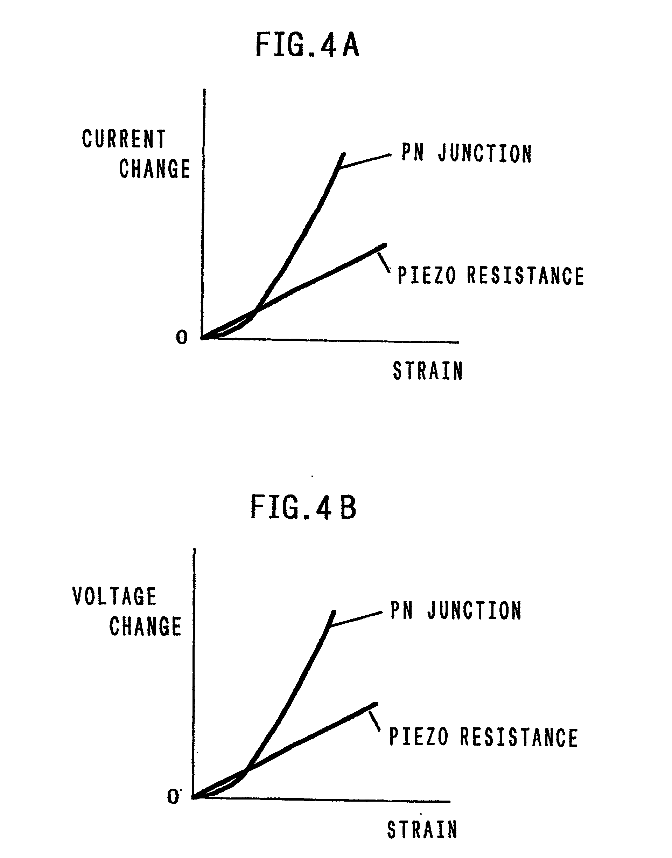

Figs. 4A and 4B show current-strain characteristics and voltage-strain characteristics as compared with characteristics of piezo resistances. Changes in current I and voltage V with stress are larger in the pn junction than in the piezo resistance at stress of more than about 1X10⁹ Pa.

As stress strain always appears at the pn junction 50 because of the thin film 8 (the insulation film 40) in the present embodiment, each stress strain is superimposed at the pn junction and larger stress strain appears than in the case that the thin film 8 is not formed.

Therefore, if stress is pre-applied at the pn junction by forming the thin film 8 and is superimposed by bending of the cantilever arm portion 10a depending on the shape of the surface of the sample, the voltage-current change for deflection of the cantilever arm portion 10a becomes larger than in the case that the thin film 8 is not formed.

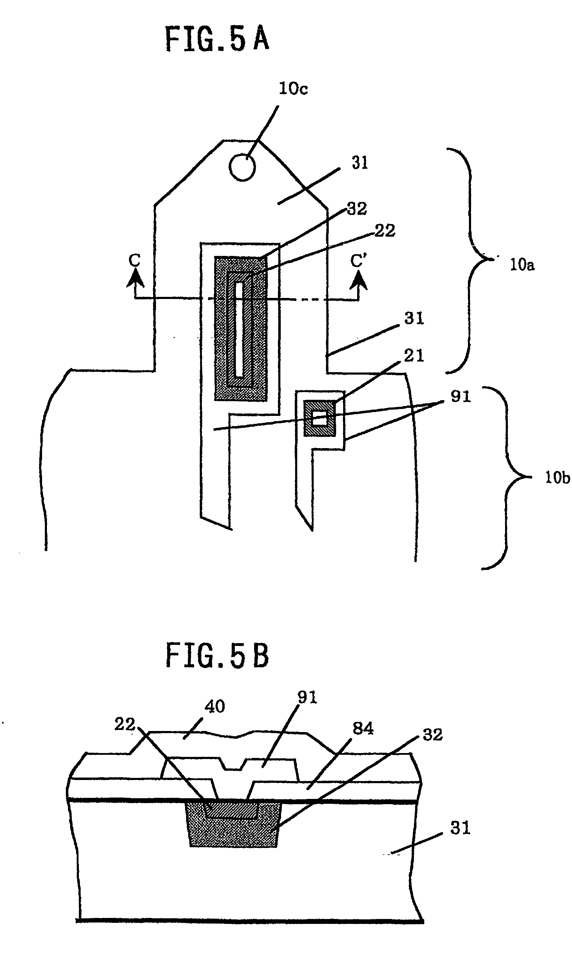

Fig. 5A is a plan view of a probe-type semiconductor strain sensor of a second embodiment of the present invention. Fig. 5B is a sectional view taken along the line C-C' of Fig. 5A.

In the present embodiment, compared with the first embodiment, the P⁺ contact 22 is formed at a center portion of the P⁻ domain 32. As electric change is detected very near the pn junction portion, higher accuracy as detection becomes possible. Although the pn junction is generally processed at the P⁻ domain, the P⁺ domain 22 is not needed and the construction becomes simple by changing the P⁻ domain to a P⁺ domain using high density doping.

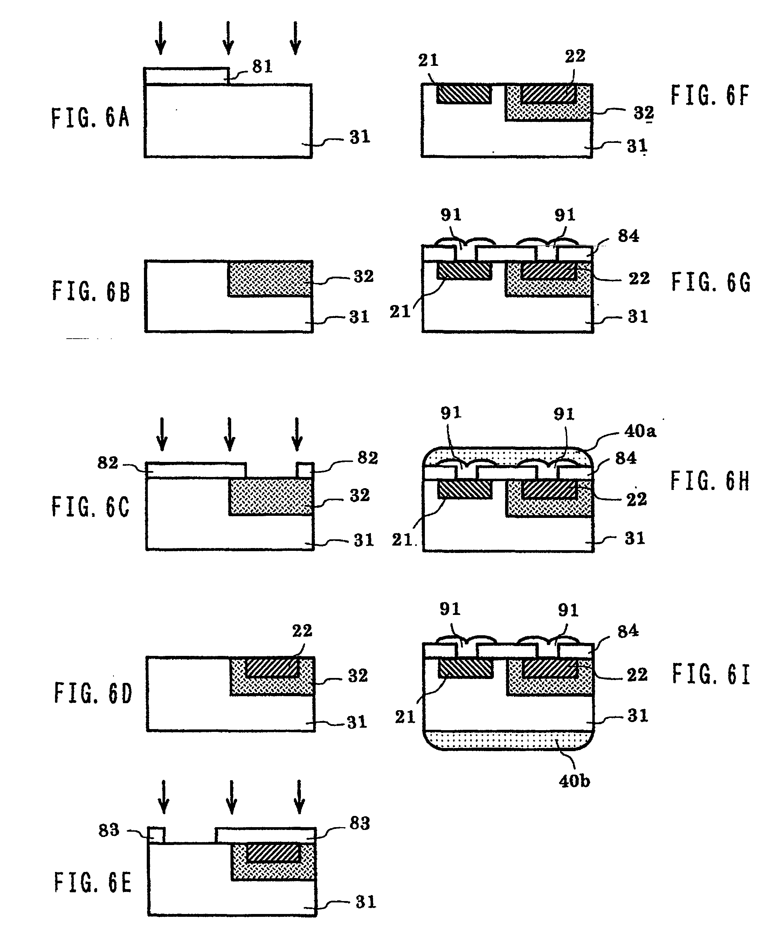

Figs. 6A to 6I are sectional views of process steps showing a method of manufacturing the semiconductor strain sensor of Fig. 2 and Fig. 6I shows a sectional structure taken along line B-B' of Fig. 2A.

First, an N-type semiconductor substrate 31 is etched to the probe shape of Fig. 2, and a resist 81 is applied over the whole surface. Next, a mask is formed by selectively removing only that part of the resist which corresponds to the P⁻ domain 32 of Fig. 2 by the well-known photo resist technique. Then a P-type impurity (for example, boron) is ion-implanted (Fig. 6A). The P⁻ domain 32 is formed by thermal diffusion (Fig. 6B).

Next, a resist 82 is applied over the whole of the surface, and a part of contact domain 32 is opened. Next, a P-type impurity is ion-implanted (Fig. 6C), and P⁺ contact domain 22 is formed by diffusion (Fig. 6D). Next, after applying a resist 83 over the whole of the surface, a part of contact domain 21 is opened. This time, an N-type impurity (for example, phosphorus) is ion-implanted (Fig. 6E), and the N⁺ contact domain 21 is formed (Fig. 6F).

Next, after a layer insulation film 84 is formed over the whole of the surface and a wiring electrode 91 is connected to exposed portions of each of contact domains 21 and 22, an insulation film 40 for pre-applying stress strain at said pn junction portion is formed on the surface (Fig. 6H). For the wiring electrode 91, a low resistance material is used such as Al, W, Ti, Ta, Cr, and so on. Although the insulation film 40 (40a) is formed on surface of the substrate in the present embodiment, the insulation film 40 (40a) may be formed on the rear surface of the substrate (Fig. 6I). It is possible that the layer insulation film 84 displaces the insulation film 40. In this case, the insulation film 40 can be omitted. By using a pre-stressed material for the wiring electrode 91, stress can be applied to the semiconductor junction portion so as to substitute for the thin film 8. Namely, any material, not necessarily an insulation film, can be available for thin film 8 provided stress is applied to the semiconductor junction 9 and provided that the electric characteristic of the semiconductor junction 9 is not prejudiced, such as by shorting and the like.

U-shaped probe arms are shown in Figs. 7 to 13 although rectangle-shaped arms have been described above. The U-shaped arm has the following two merits compared with a rectangle-shaped arm having the same outside dimension. One is that the small actual width of the arm makes the spring constant small. The other is that air resistance becomes small as the arm vibrates thus enabling more accurate observation because the center of the arm is hollow.

Fig. 7A is a plan view of a probe of a third embodiment according to the present invention. Fig. 7B is a cross-sectional view taken along line D-D' of Fig. 7A. The figures show mainly an arm portion 10a of a probe 10 and a pn junction of a semiconductor junction, and detail of the exploring needle 10c is omitted. The pn junction 50 is formed along the arm portion 10a so as to detect all stress of the arm portion.

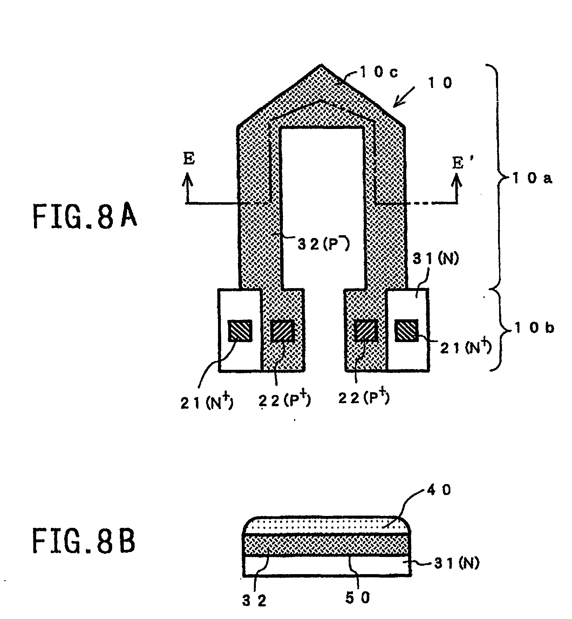

Fig. 8A is a plan view of a probe of a fourth embodiment according to the present invention. Fig. 8B is a cross-sectional view taken along line E-E' of Fig. 8A. The same reference numerals are used as in the previous figures to show the same or similar parts. The present embodiment has the merit that the P⁻ domain 32 is actually formed over the whole of the surface of the probe 10.

In the above-mentioned third embodiment, the area of the pn junction is comparatively small as the pn junction 50 is formed over only apart of the surface of the probe 10. With that arrangement, while the leakage current is small, it is difficult to obtain high sensitivity. However, the fourth embodiment has the merit that high sensitivity is obtained although leakage current increases a little compared with the third embodiment.

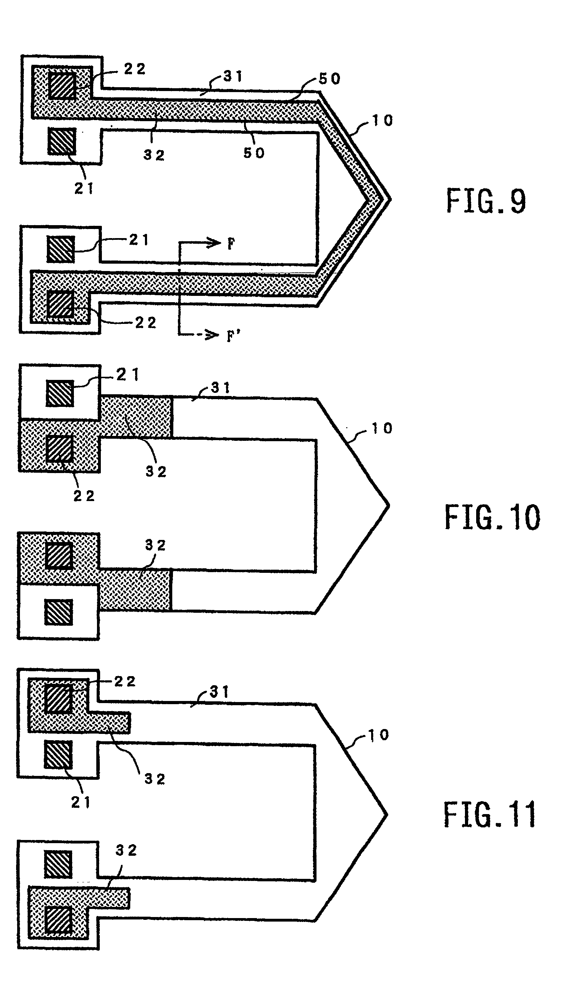

Next, referring to Figs. 9 to 13, other embodiments of the present invention will be described. The insulation film 40 may be formed on the upper or rear surface in any of these embodiments although the film is not shown in each figure.

Fig. 9 is a plan view of a fifth embodiment of the present invention. The same reference numerals are used as in previous figures. The embodiment is characterised in that the P⁻ domain 32 is formed in a band shape along the center portion of the probe 10. The pn junction is not exposed at the end surface of the probe 10. Although leakage current generally appears near the end surface of the pn junction, high sensitivity is obtained in the present embodiment while depressing leakage current. However, the manufacturing process becomes a little complex because the pn junction 50 is not exposed at the end surface of the probe 10.

Fig. 10 is a plan view of a sixth embodiment of the present invention. The same reference numerals are used as in previous figures. The present embodiment is based on the assumption that strain does not appear over the whole of the U-shaped portion when the probe bends, but the strain is largest at the junctions of the cantilever arm portion 10a with the supporting portion 10b, namely a root part of the probe 10.

The present embodiment, as shown in figure 10, is characterised in that the P⁻ domain 32 is formed at only said root part where strain becomes largest when the probe 10 bends. According to the present embodiment, high sensitivity is obtained while leakage current is reduced; as the pn junction is not formed at parts not contributing to the detection of strain.

Fig. 11 is a plan view of a seventh embodiment of the present invention. The same reference numerals are used as in previous figures. The present embodiment is characterised in that the P⁻ domain 32 is formed at only the root part of the cantilever 10 and at that location it is formed in a band shape at the center portion of the probe 10 in order to decrease leakage current.

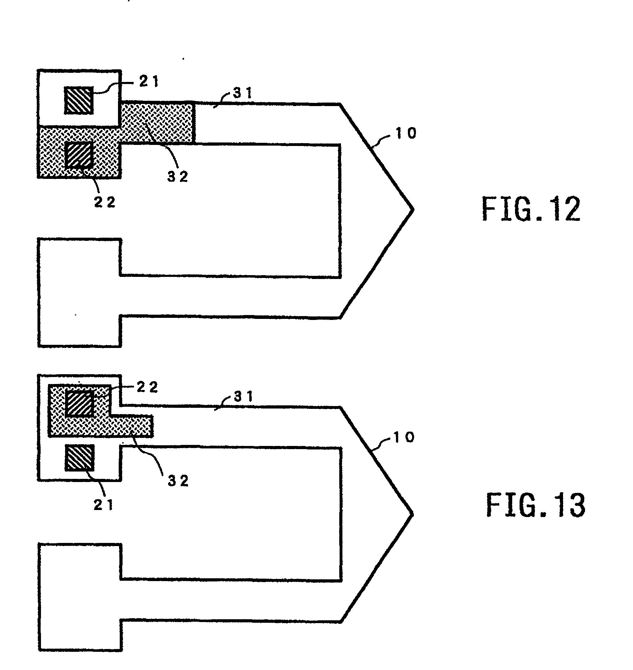

Figs. 12 and 13 are plan views of an eighth and ninth embodiment of the present invention. The same reference numerals are used as in previous figures. These embodiments are characterised in that the respective P⁻ domains 32 are formed at only one of said root parts of the cantilever. According to these embodiments, leakage current sharply decreases, although detecting sensitivity also decreases a little.

If a difference signal is obtained from the pn junction formed at either end of the arm portion 10a, the third to seventh embodiments (Figs. 7 to 11) can readily detect the bending quantity of the arm.

Although the P⁻ diffusion domain 32 is formed in an N-type substrate 31 to form the pn junction in each of the above mentioned embodiments, conversely an N⁻ domain may be formed in a P-type substrate to form the pn junction. That is, the pn junction can be produced even if P type material is used in place of N type material. Thus, an N⁻ domain is included as an embodiment of the present invention.

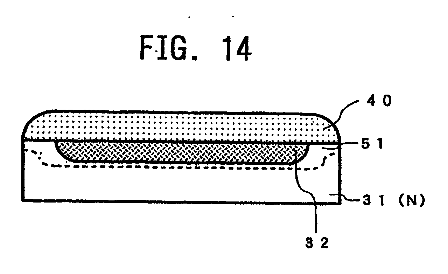

In the embodiments described with reference to Figs. 9, 11, and 13, the P⁻ diffusion domain 32 of the pn junction is formed leaving a space from both end portions of the cantilever so that the pn junction is not exposed at the end surface of the probe 10. In this case, a depletion layer 51 appears as shown in Fig. 14 and this sometimes reaches the end portion of the substrate when a reverse bias is applied to the pn junction. A new problem then appears because leakage current increases so that measuring sensitivity decreases. Therefore, in each embodiment of the present invention described below, the increase of leakage current is surpressed by forming a guard preventing spread of the depletion layer. Fig. 14 is a sectional view taken along line F-F' of Fig. 9.

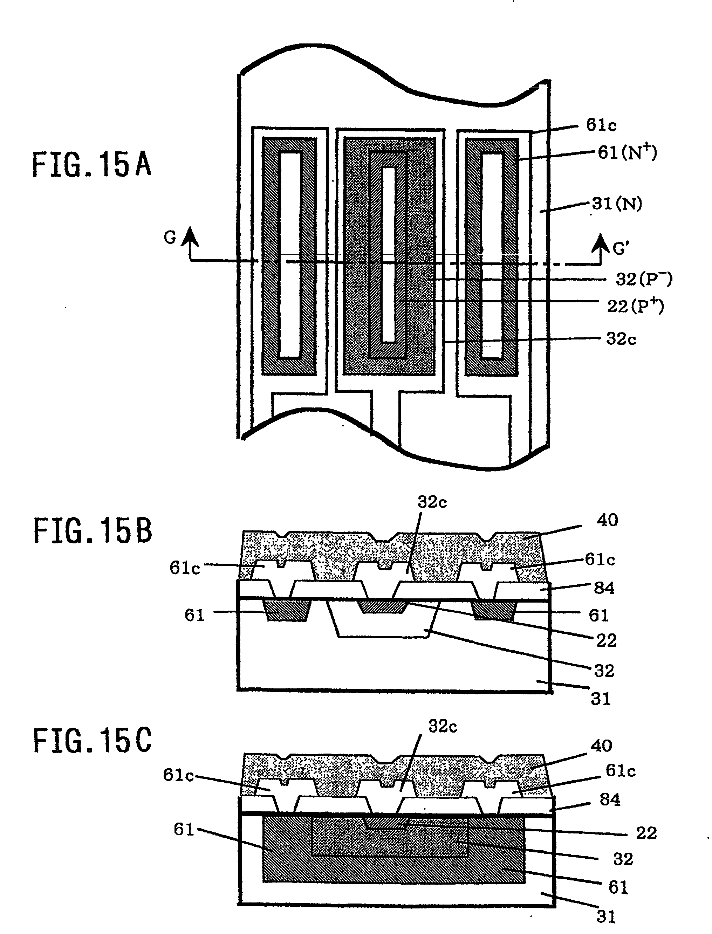

Fig. 15A is a plan view of a tenth embodiment of the present invention and Figs. 15B and 15C show different variations as sectional views taken along line G-G' of Fig. 15A. These figures show an enlarged sensor portion of an arm portion 10a. In the present embodiment, a pn junction is formed by P⁻ domain 32 which has a band shape at the center of the arm portion 10a. The P⁻ domain 32 is not exposed at the end surfaces of the arm portion 10a, as shown in Fig. 15A. At the surface of the N-type substrate 31 between the ends of the arm portion 10a and the P⁻ domain 32, an N⁺ guard layer 61 is formed to prevent spread of the depletion layer. Contact electrodes 32c and 61c are formed at the P⁻ domain 32 and the N⁺ guard layer 61 respectively. The contact electrode has the same function as the wiring electrode 91 of Fig. 6 and can be produced by the similar material.

According to the above described configuration, if the depletion layer appears at the pn junction portion as a result of a reverse bias applied between the P⁻ domain 32 and the N-type substrate 31, spread in the horizontal direction is prevented by the N⁺ guard layer 61 so that the depletion layer does not reach the end portion of the probe 10. Therefore, measuring sensitivity is kept high because any increase of leak current is surpressed. The N⁺ guard layer 61 may be formed only at the surface of the N-type substrate 31 as shown in Fig. 15B, or may be formed so as to surround continuously the P⁻ domain 32 internally of the substrate as shown in Fig. 15C.

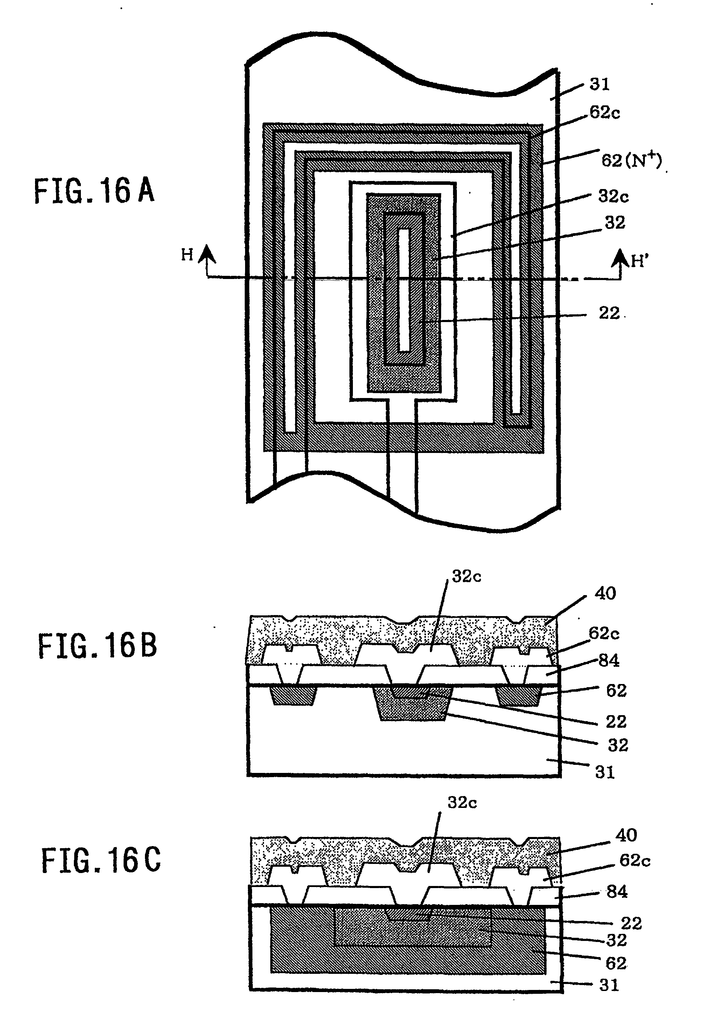

Fig. 16A is a plan view of an eleventh embodiment of the present invention. Figs. 16B and 16C show different variations as sectional views taken along line H-H' of Fig. 16A. The same reference numerals are used as in previous figures. In the present embodiment, a P⁻ domain 32 is formed in a band shape at the center of the arm portion so that the pn junction is not exposed at the end surface of the arm portion 10a as shown in Fig. 16A. An N⁺ guard layer 62 is formed so as to surround the P⁻ domain 32. Contact electrodes 32c and 62c are formed at the P⁻ domain 32 and the N⁺ guard layer 62.

In the present embodiment, spread of the depletion layer in the horizontal direction is prevented by the N⁺ guard layer 62 so that depletion layer does not reach the end portion of the probe 10. Therefore, measuring sensitivity is kept high because potential increase of leak current is surpressed. The N⁺ guard layer 62 may be formed only at the surface of the N-type substrate 31 as shown in Fig. 16B, or may be formed so as to surround continuously the P⁻ domain 32 internally of the substrate as shown in Fig. 16C.

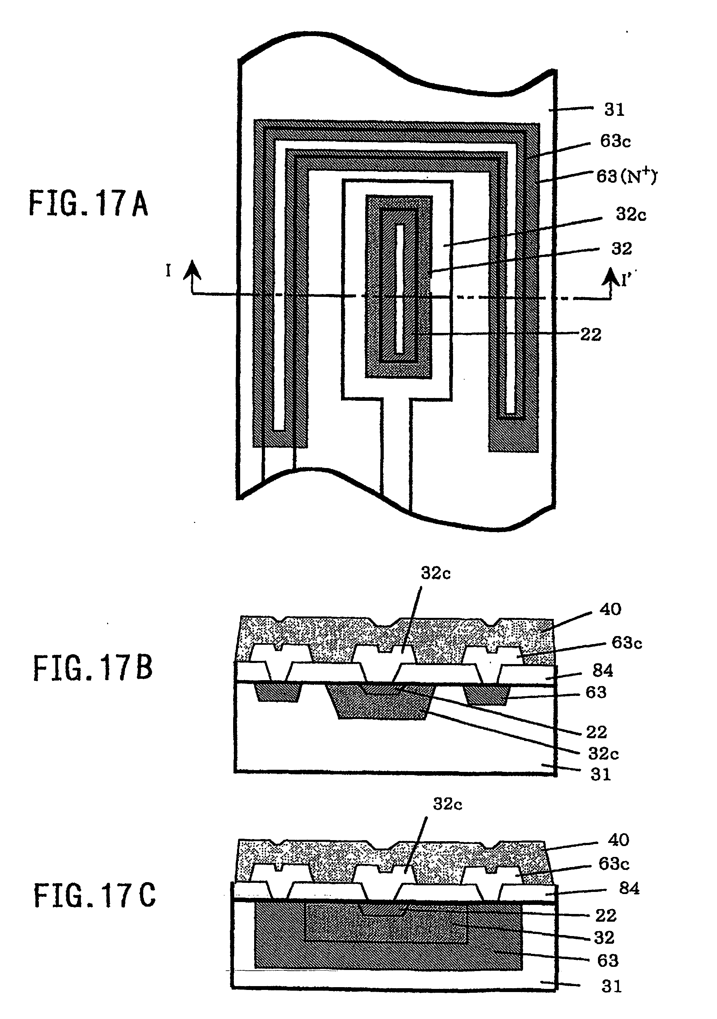

Fig. 17A is a plan view of a twelfth embodiment of the present invention. Figs. 17B and 17C show different variations as sectional views taken along line I-I' of Fig. 17A. The same reference numerals are used as in previous figures. In the present embodiment as shown in Fig. 17A, a P⁻ domain 32 is formed in a band shape at the center of the arm portion so that the pn junction is not exposed at the end surfaces of the arm portion 10a. The embodiment is characterised in that an N⁺ guard layer 63 is formed so as to surround the P⁻ domain 32 on three sides. Contact electrodes 32c and 63c are formed at the P⁻ domain 32 and the N⁺ guard layer 63.

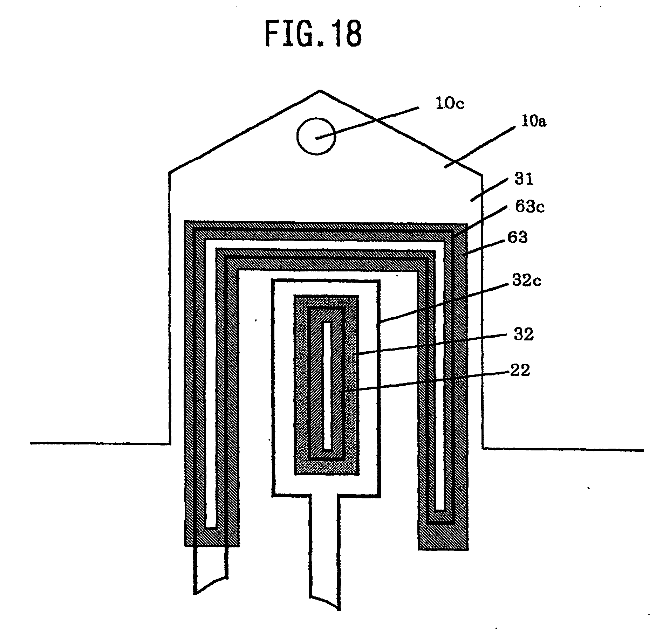

In the present embodiment, spread of the depletion layer in the horizontal direction is prevented by the N⁺ guard layer 63 so that the depletion layer does not reach the end portion of the probe 10. Therefore, measuring sensitivity is kept high because potential increase of leakage current is surpressed. The N⁺ guard layer 63 may be formed only at the surface of the N-type substrate 31 as shown in Fig. 17B, or may be formed so as to surround continuously the P⁻ domain 32 internally of the substrate as shown in Fig. 17C. When the guard is formed, the width of the arm portion 10a becomes wide because the width of the substrate becomes wide compared with the case that the guard is not formed. Because of this it is easier to produce the probe in a rectangular shape rather than a U-shape. Fig. 18 shows an example in which the pn junction sensor of Fig. 17A is produced on a rectangular lever portion.

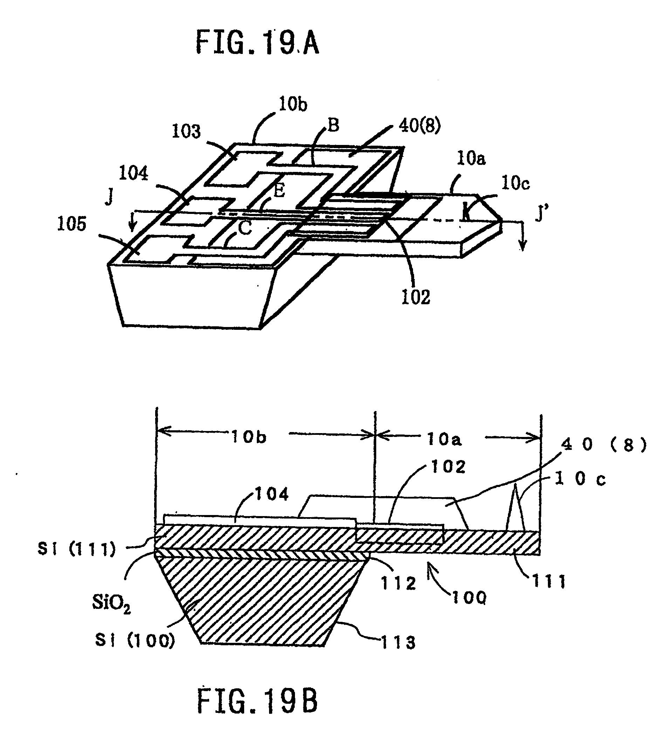

Next, a case in which a bipolar transistor is used at a bending portion of the arm as a semiconductor junction 9 will be described. The outline thereof will be described with reference to Fig. 19. Detailed embodiments will be described as thirteenth to fifteenth embodiments of the invention. Fig. 19A shows a perspective view of the present embodiment. Fig. 19B shows a sectional view along line J-J' of Fig. 19A. As the bipolar transistor includes a pn junction, the fundamental theory of operation is the same as for the case in which the pn junction is used. However, sensitivity is larger than when a simple pn junction is used because the transistor has an amplifying operation.

A probe 10 comprises a cantilever armportion 10a and a supporting portion 10b as shown in Fig. 19A. At the tip of the cantilever arm portion 10a, an exploring needle 10c for SMP is formed. At the bending portion, including the junction of the cantilever arm portion 10a with the supporting portion 10b, a bipolar transistor 102 is formed. Wirings 103, 104, and 105 are formed on the surface of the supporting portion 10b. The wirings are electrically connected to a base (B), an emitter (E), and a collector (C) of the bipolar transistor 102.

The probe 10 comprises: an active layer 111 of Si (silicon) with surface direction (111), an intermediate layer 112 of SiO₂, and a base layer 113 of Si with surface direction (100) as shown in Fig. 19A. The bipolar transistor 102 is formed in the active layer 111. The shallower the transistor is formed, the higher the sensitivity becomes. The bipolar transistor should be produced on a Si (iii) surface to obtain the best characteristic. The Si (111) surface facilitates sharpening of the tip of the exploring needle 10c. Therefore, it is desirable to use a (111) surface for the active layer 111 in the bipolar transistor, although the active layer can be produced in a (100) surface. It is desirable that the base layer 113 is formed in a (100) surface as the shape required after etching (as shown in Fig. 19B) is easily obtained when the base layer 113 is formed using KOH solution.

An insulating film 40 (thin film 8) such as, for example, a SiO₂ film, a Si₃O₄ film, or the like is layered on the surface of the probe 10 in a similar manner to the first embodiment, although it is partly omitted in figures 19A and 19B. The insulating film has the operation of providing a constant stress to the cantilever arm portion 10a, and it is desirable for conducting measurements that the arm portion bends in the opposite direction to the side where the exploring needle is formed. It is desirable that the pre-stress applied by the insulating film is about 1x10⁹ Pa (1X10¹⁰ dyn/cm²). It is not necessary to form the insulating film over the whole surface of the probe 10. The film may be formed on, for example, only the surface of the cantilever arm portion 10a or the surface of the bipolar transistor 102. Thus, by previously applying a stress bias to the probe 10, the probe 10 can be used in a good sensitivity range thereof. In the description below, reference to the insulating film 40 (the thin film 8) will be omitted.

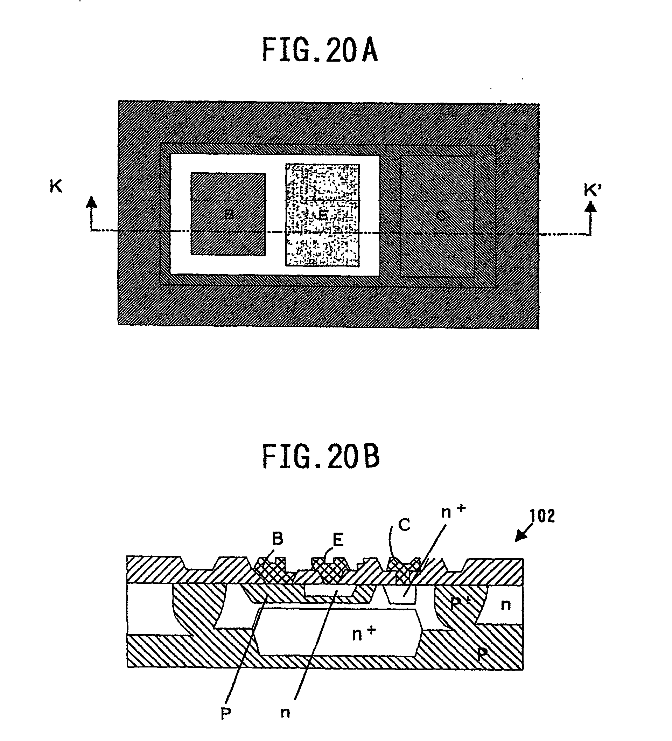

Referring to Figs. 20A and 20B, a specific example of the bipolar transistor 102 of the thirteenth embodiment of the present invention will be described. Figs. 20A and 20B show an example of NPN type. Fig. 20A is a plan view of a bipolar transistor 102 according to Fig. 19A and Fig. 20B is a sectional view taken along the line K-K' of Fig. 20A.

The bipolar transistor 102 is formed on a p-type substrate and the electrodes thereof have reference numerals corresponding to the collector C, the emitter E, and the base B of the transistor, as shown in figures 20A and 20B. Since processing metods for forming a bipolar transistor are well known, description thereof is omitted herein.

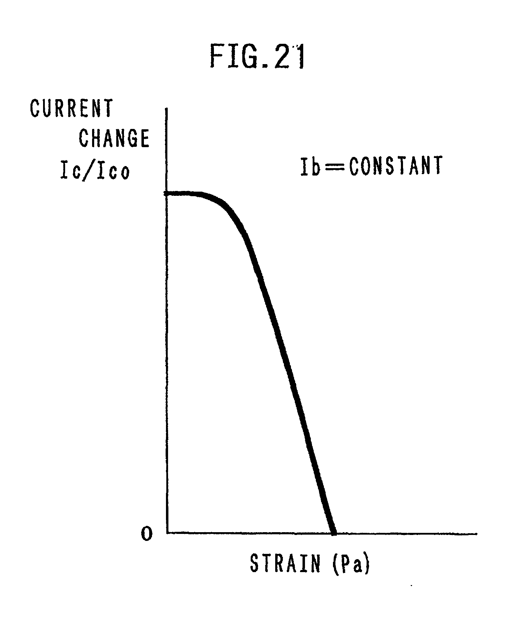

Fig. 21 shows a characteristic curve of the bipolar transistor 102 when the base current is constant. The horizontal axis shows strain quantity (dyn/cm²) and the vertical axis shows change of collector current. The characteristic teaches that the change of collector current as a function of strain is large and shows excellent sensitivity.

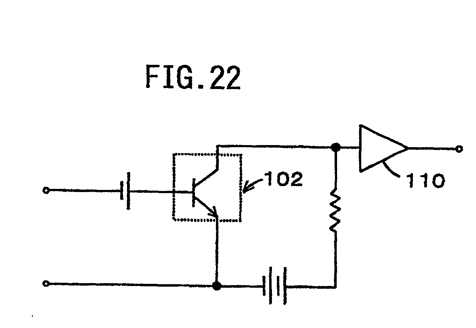

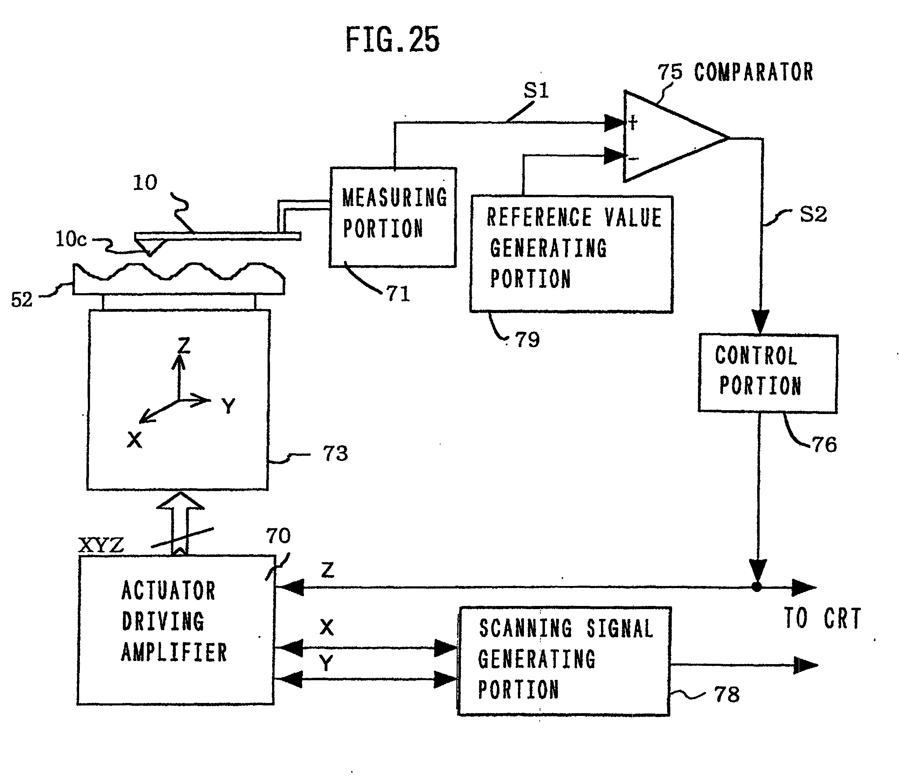

Fig. 22 shows an example of a detecting circuit used with a probe 10 having a bipolar transistor when conducting an actual SPM measurement. Reference 110 denotes an amplifying circuit which forms part of the measuring portion 71 shown in Fig. 25. The amplifying circuit is similar to a general amplifying circuit and it is easy to detect the strain signal. Various methods can be used for a configuration of a detecting circuit.

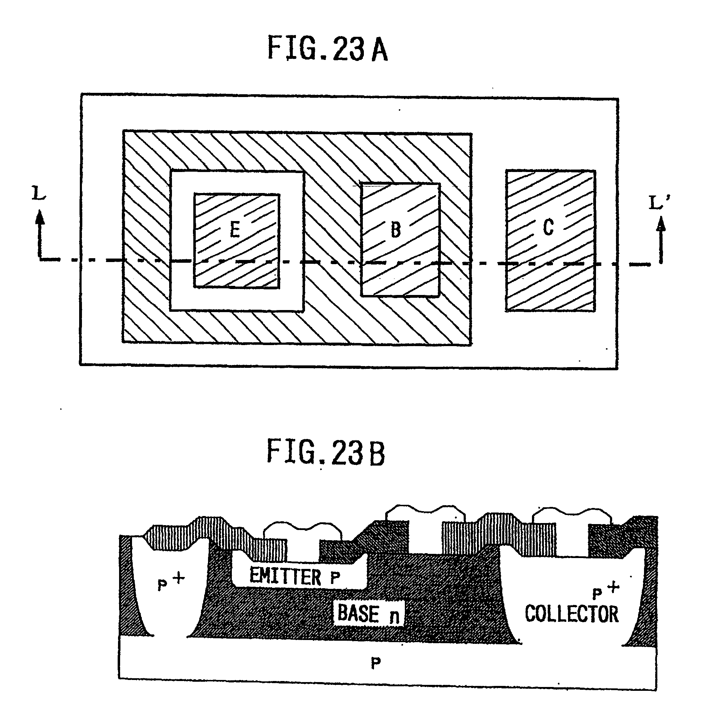

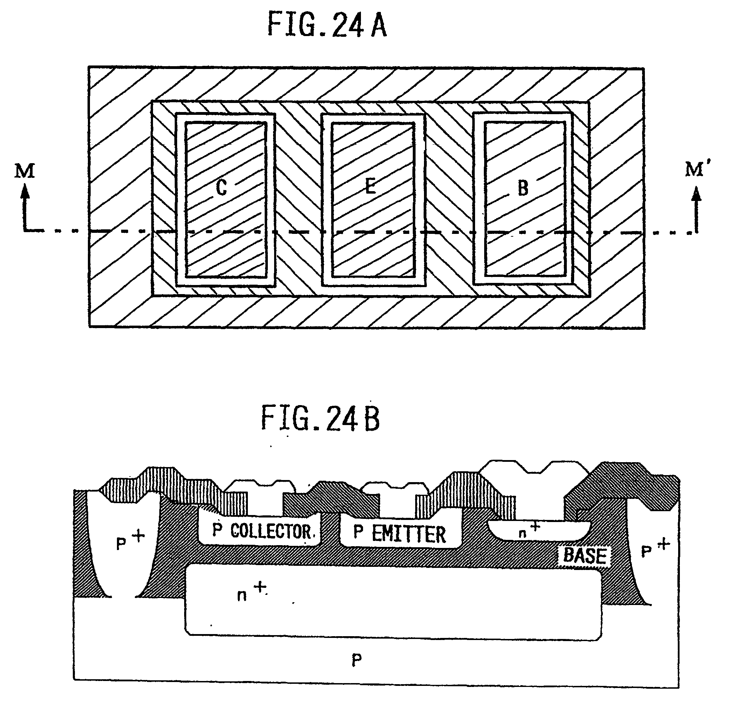

Although an NPN bipolar transistor is described as an example in this embodiment, the PNP bipolar transistor shown in Figs. 23 and 24 can obtain a similar sensitivity.

Fig. 23A is a plan view of a PNP transistor of a fourteenth embodiment according to the present invention and Fig. 23B is a sectional view taken along the line L-L' of Fig. 23A.

Fig. 24A is a plan view of horizontal type PNP transistor of a fifteenth embodiment according to the present invention. Fig. 24B is a sectional view taken along the line M-M' of Fig. 24A. As these transistor are well known, a description thereof will be omitted herein.

Although it is described above that the thin film providing pre-stress is insulating film 40, the present invention is not limited thereto. The thin film for providing pre-stress may be a conductive film or a semiconductive film if an insulating film is previously formed on the surface of the substrate without providing any pre-stress and the thin film is formed on surface of the insulating film.

Although it is described above that the thin film providing pre-stress is formed only on a main surface of the probe 10, the present invention is not limited thereto. The thin film may be formed on both surfaces of the probe 10.

Fig. 25 is a block diagram showing the configuration of a scanning probe microscope using the present invention. A sample 52 is set on an XYZ sample stage 55, and an exploring needle 10c of the probe is arranged facing the stage 55. Output from the semiconductor junction of the probe is detected by a measuring portion 71 and input therefrom to a non-inversion input terminal (+) of a differential amplifier 75 as a bending signal S1. A reference value corresponding to the bending of the probe 10 is input to an inversion input terminal (-) of the differential amplifier 75; so that the output of the differential amplifier 75 becomes zero when bending is zero for example. An error signal S2 is output from the differential amplifier and input to a control portion 76. The control portion 76 controls an actuator driving amplifier 70 so that the error signal S2 approaches zero. The output signal of the control portion 76 is supplied to a CRT as a luminance signal. A scanning signal generating portion 78 supplies a differential signal to the actuator driving amplifier for slightly moving the sample 52 in XYZ directions. Scanning signal generating portion 78 also supplies a raster scanning signal is supplied to the CRT.

As mentioned above, the present invention has the following advantages:
(1) Sensitivity to bending of the probe increases as a result of the provision of: a semiconductor junction in which an electric characteristic changes sensitivity in response to strain, thus enabling detection of bending of the probe as a change of electric characteristic of semiconductor junction; and a thin film (insulating film) formed on a main surface of the probe so as to pre-stress the semiconductor junction domain where stress strain appears when the probe bends.
(2) Measuring sensitivity can be kept high and potential increase of leakage current surpressed by providing a guard layer formed between a pn junction and an end portion of the probe so that the depletion layer appearing at the junction part does not reach the end portion of the probe.
(3) High sensitivity is possible compared with a pn junction by forming a bipolar transistor at the bending domain of a probe and providing a pre-stress thin film (insulating film) on a surface of the probe.
(4) Improved accuracy is obtained by arranging for the arm portion to bend towards the surface opposite to that having the exploring needle by applying a pre-stress thin film (the insulating film) such that the angle between the exploring needle and a sample becomes substantially vertical.
(5) The surface of a sample can be observed with high sensitivity by monitoring the change of electric characteristic of a semiconductor junction in a probe of a scanning probe microscope.

## Claims

1. A semiconductor strain sensor comprising:
a probe (10) having a free end and a fixed end;
a semiconductor junction (9) formed at a domain where stress/strain appears as a result of displacement of the free end of the probe; and
means for pre-stressing the sensor.

2. The semiconductor strain sensor as claimed in claim 1, wherein said means comprises a thin film (8) formed on a surface of the probe.

3. The semiconductor strain sensor as claimed in claim 1 or claim 2, wherein said semiconductor junction is a pn junction (50), and said probe comprises a first conductive type semiconductor substrate and a second conductive type semiconductor region formed thereon.

4. The semiconductor strain sensor as claimed in claim 3, wherein said second conductive type semiconductor region is a belt-shaped region formed so as to extend along one end portion of the probe.

5. The semiconductor strain sensor as claimed in claim 3, wherein said second conductive type semiconductor region is formed over a substantial portion of the free end of the probe.

6. The semiconductor strain sensor as claimed in claim 3, wherein said second conductive type semiconductor region is formed only at the said domain.

7. The semiconductor strain sensor as claimed in claim 3, wherein said second conductive type semiconductor region is a belt-shaped region formed along a center portion of the probe but excluding the end portions thereof.

8. The semiconductor strain sensor as claimed in claim 7, wherein a first conductive type high density semiconductor region is formed in the first conductive type semiconductor substrate between the belt-shaped second conductive type semiconductor region and an end portion of the probe.

9. The semiconductor strain sensor as claimed in claim 8, wherein the first conductive type high density semiconductor region is formed so as to surround the belt-shaped second conductive type semiconductor region at the surface of the substrate.

10. The semiconductor strain sensor as claimed in claim 9, wherein the first conductive type high density semiconductor region is formed so as to envelope the belt-shaped second conductive type semiconductor region within the substrate.

11. The semiconductor strain sensor as claimed in claim 1 or claim 2, wherein said semiconductor junction is formed by a bipolar transistor.

12. A semiconductor strain sensor as claimed in claim 11, wherein said probe comprises an active layer of silicon having a (111) surface direction, an intermediate layer of silicon dioxide, and a base layer of silicon having a (100) surface direction.

13. A semiconductor strain sensor as claimed in claim 12, wherein said bipolar transistor is formed in said active layer.

14. A method of manufacturing a semiconductor strain sensor comprising the steps of:
forming a probe having a free end and a fixed end by etching a first conductive type semiconductive substrate;
forming a mask to define a domain where stress/strain is to be generated upon displacement of said free end of said probe;
forming a pn junction at said domain by doping with a second conductive type impurity; and
forming a thin film on a surface of said probe so as to provide a pre-stress.

15. A scanning probe microscope comprising a semiconductor strain sensor according to any of claims 1 to 13.

## Patentansprüche

1. Halbleiter-Dehnungssensor, umfassend:
einen Fühler (10), der ein freies Ende und ein festes Ende aufweist;
einen Halbleiterübergang (9), der in einem Bereich ausgebildet ist, in welchem eine Beanspruchung/Dehnung infolge einer Verschiebung des freien Endes des Fühlers auftritt; und
Mittel zum Vorbeanspruchen des Sensors.

2. Halbleiter-Dehnungssensor nach Anspruch 1, bei dem das Mittel eine dünne Schicht (8) umfaßt, die auf einer Oberfläche des Fühlers ausgebildet ist.

3. Halbleiter-Dehnungssensor nach Anspruch 1 oder Anspruch 2, bei dem der Halbleiterübergang ein PN-Übergang (50) ist; wobei der Fühler ein Halbleitersubstrat eines ersten Leitfähigkeitstyps und einen darauf ausgebildeten Halbleiterbereich eines zweiten Leitfähigkeitstyps umfaßt.

4. Halbleiter-Dehnungssensor nach Anspruch 3, bei dem der Halbleiterbereich des zweiten Leitfähigkeitstyps ein bandförmiger Bereich ist, der so ausgebildet ist, daß er sich längs eines Endabschnitts des Fühlers erstreckt.

5. Halbleiter-Dehnungssensor nach Anspruch 3, bei dem der Halbleiterbereich des zweiten Leitfähigkeitstyps über einen wesentlichen Abschnitt des freien Endes des Fühlers ausgebildet ist.

6. Halbleiter-Dehnungssensor nach Anspruch 3, bei dem der Halbleiterbereich des zweiten Leitfähigkeitstyps nur an dem Bereich ausgebildet ist.

7. Halbleiter-Dehnungssensor nach Anspruch 3, bei dem der Halbleiterbereich des zweiten Leitfähigkeitstyps ein bandförmiger Bereich ist, der längs eines Mittelabschnitts des Fühlers, jedoch ausschließlich der Endabschnitte desselben, ausgebildet ist.

8. Halbleiter-Dehnungssensor nach Anspruch 7, bei dem ein hochdichter Halbleiterbereich eines ersten Leitfähigkeitstyps im Halbleitersubstrat des ersten Leitfähigkeitstyps zwischen dem bandförmigen Halbleiterbereich des zweiten Leitfähigkeitstyps und einem Endabschnitt des Fühlers ausgebildet ist.

9. Haibleiter-Dehnungssensor nach Anspruch 8, bei dem der hochdichte Halbleiterbereich des ersten Leitfähigkeitstyps so ausgebildet ist, daß er den bandförmigen Halbleiterbereich des zweiten Leitfähigkeitstyps an der Oberfläche des Substrats umgibt.

10. Halbleiter-Dehnungssensor nach Anspruch 9, bei dem der hochdichte Halbleiterbereich des ersten Leitfähigkeitstyps so ausgebildet ist, daß er den bandförmigen Halbleiterbereich des zweiten Leitfähigkeitstyps innerhalb des Substrats umhüllt.

11. Halbleiter-Dehnungssensor nach Anspruch 1 oder Anspruch 2, bei dem der Halbleiterübergang von einem Bipolartransistor gebildet wird.

12. Halbleiter-Dehnungssensor nach Anspruch 11, bei dem der Fühler eine aktive Lage aus Silicium mit einer (111)-Oberflächenrichtung, eine Zwischenlage aus Siliciumdioxid und eine Basislage aus Silicium mit einer (100)-Oberflächenrichtung umfaßt.

13. Halbleiter-Dehnungssensor nach Anspruch 12, bei dem der Bipolartransistor in der aktiven Lage ausgebildet ist.

14. Verfahren zur Herstellung eines Halbleiter-Dehnungssensors, das die Schritte umfaßt:
Ausbilden eines Fühlers, der ein freies Ende und ein festes Ende aufweist, durch Ätzen eines Halbleitersubstrats eines ersten Leitfähigkeitstyps;
Ausbilden einer Maske, um einen Bereich zu definieren, in welchem aufgrund einer Verschiebung des freien Endes des Fühlers eine Beanspruchung/Dehnung erzeugt werden soll;
Ausbilden eines PN-Übergangs an dem Bereich durch Dotieren mit einem Dotierstoff eines zweiten Leitfähigkeitstyps; und
Ausbilden einer dünnen Schicht auf einer Oberfläche des Fühlers, um somit eine Vorbeanspruchung zu schaffen.

15. Abtastfühler-Mikroskop, das einen Halbleiter-Dehnungssensor nach irgendeinem der Ansprüche 1 bis 13 umfaßt.

## Revendications

1. Capteur de déformation à semi-conducteur comprenant :
une sonde (10) ayant une extrémité libre et une extrémité fixe ;
une jonction de semi-conducteurs (9) formée à un domaine où la contrainte/déformation apparaît en résultat au déplacement de l'extrémité libre de la sonde ; et
des moyens pour la précontrainte du capteur.

2. Capteur de déformation à semi-conducteur selon la revendication 1, dans lequel lesdits moyens comprennent une mince couche (8) formée à une surface de la sonde.

3. Capteur de déformation à semi-conducteur selon la revendication 1 ou la revendication 2, dans lequel ladite jonction de semi-conducteurs est une jonction PN (50), et ladite sonde comprend un premier substrat semi-conducteur de type conducteur et une deuxième région semi-conductrice de type conducteur formée sur celui-ci.

4. Capteur de déformation à semi-conducteur selon la revendication 3, dans lequel ladite deuxième région semi-conductrice de type conducteur est une région en forme de ceinture formée de manière à s'étendre le long d'un segment d'une extrémité de la sonde.

5. Capteur de déformation à semi-conducteur selon la revendication 3, dans lequel ladite deuxième région semi-conductrice de type conducteur est formée sur un segment substantiel de l'extrémité libre de la sonde.

6. Capteur de déformation à semi-conducteur selon la revendication 3, dans lequel ladite deuxième région semi-conductrice de type conducteur est uniquement formée audit domaine.

7. Capteur de déformation à semi-conducteur selon la revendication 3, dans lequel ladite deuxième région semi-conductrice de type conducteur est une région en forme de ceinture formée le long d'un segment central de la sonde mais excluant les segments d'extrémité de celle-ci.

8. Capteur de déformation à semi-conducteur selon la revendication 7, dans lequel une première région semi-conductrice de haute densité de type conducteur est formée dans le premier substrat semi-conducteur de type conducteur entre la deuxième région semi-conductrice de type conducteur en forme de ceinture et un segment d'une extrémité de la sonde.

9. Capteur de déformation à semi-conducteur selon la revendication 8, dans lequel la première région semi-conductrice de haute densité de type conducteur est formée de manière à entourer la deuxième région semi-conductrice de type conducteur en forme de ceinture à la surface du substrat.

10. Capteur de déformation à semi-conducteur selon la revendication 9, dans lequel la première région semi-conductrice de haute densité de type conducteur est formée de manière à envelopper la deuxième région semi-conductrice de type conducteur en forme de ceinture à l'intérieur du substrat.

11. Capteur de déformation à semi-conducteur selon la revendication 1 ou la revendication 2, dans lequel ladite jonction de semi-conducteurs est formée par un transistor bipolaire.

12. Capteur de déformation à semi-conducteur selon la revendication 11, dans lequel ladite sonde comprend une couche active de silicium ayant une direction de surface (111), une couche intermédiaire de dioxyde de silicium et une couche de base de silicium ayant une direction de surface (100).

13. Capteur de déformation à semi-conducteur selon la revendication 12, dans lequel ledit transistor bipolaire est formé dans ladite couche active.

14. Procédé de fabrication d'un capteur de déformation à semi-conducteur comprenant les étapes de :
formation d'une sonde ayant une extrémité libre et une extrémité fixe par attaque chimique d'un premier substrat semi-conducteur de type conducteur ;
formation d'un masque pour définir un domaine où la contrainte/déformation doit être générée dès le déplacement de ladite extrémité libre de ladite sonde ;
formation d'une jonction PN audit domaine par dopage à l'aide d'une deuxième impureté de type conducteur ; et
formation d'une couche mince à une surface de ladite sonde de manière à générer une précontrainte.

15. Microscope à sonde de balayage comprenant un capteur de déformation à semi-conducteur selon l'une quelconque des revendications 1 à 13.
